# FASCICULE DE BREVET EUROPEEN

(11) **EP 3 045 837 B1**
(45) Date de publication et mention de la délivrance du brevet: **03.07.2019**
(21) Numéro de dépôt: 15202897.3
(22) Date de dépôt: 29.12.2015
(51) Int. Cl.: F24S 10/90, F28D 15/02

(54) **CALODUC COMPRENANT UN FLUIDE CALOPORTEUR ET UN GAZ ABSORBABLE OU ADSORBABLE, ET UN MATERIAU POREUX**
WÄRMELEITROHR, DAS EINE WÄRMEÜBERTRAGUNGSFLÜSSIGKEIT UND EIN AB- ODER ADSORBIERBARES GAS ENTHÄLT, SOWIE PORÖSES MATERIAL
HEAT PIPE COMPRISING A HEAT-TRANSFER FLUID AND AN ABSORBABLE OR ADSORBABLE GAS, AND A POROUS MATERIAL

(30) Priorité: 13.01.2015 FR 1550228
(43) Date de publication de la demande: 20.07.2016
(73) Titulaire: COMMISSARIAT À L'ÉNERGIE ATOMIQUE ET AUX ÉNERGIES ALTERNATIVES, 75015 Paris (FR); Viessmann Faulquemont, 57380 Faulquemont (FR)
(72) Inventeur: DELORD, Christine, 26220 DIEULEFIT (FR); HAFNER, Bernd, 35108 ALLENDORF (DE)
(74) Mandataire: Cabinet Laurent & Charras

(56) Documents cités:
- WO-A1-2009/030090
- FR-A1- 3 003 636
- US-A- 4 217 882
- US-A- 4 474 170
- US-A1- 2009 008 066
- US-A1- 2011 067 416

## Description

### DOMAINE DE L'INVENTION

La présente invention concerne un caloduc comprenant un fluide caloporteur, un gaz absorbable ou adsorbable, et un matériau poreux apte à fixer ce gaz.

Le domaine d'utilisation de la présente invention concerne notamment les capteurs thermiques, tels que les capteurs solaires à tubes sous vide à caloducs.

### ETAT ANTERIEUR DE LA TECHNIQUE

Un caloduc permet d'assurer des échanges thermiques (transfert de chaleur) au moyen d'un fluide caloporteur en équilibre entre sa phase vapeur et sa phase liquide.

Typiquement, un caloduc est constitué d'un tube hermétiquement scellé, renfermant un fluide caloporteur. Les extrémités du tube correspondent généralement à un condenseur et à un évaporateur qui permettent respectivement la condensation liquide et la vaporisation du fluide caloporteur.

Ce type de dispositif est couramment utilisé dans les capteurs solaires destinés à chauffer l'eau sanitaire ou l'eau de chauffage.

De manière générale, lorsque la température du fluide caloporteur augmente, celui-ci est vaporisé. Le condenseur collecte la vapeur de fluide caloporteur et la condense en liquide. Il peut alors à nouveau être vaporisé dans l'évaporateur.

Le transfert d'énergie entre le fluide caloporteur sous forme de vapeur et un deuxième fluide caloporteur situé dans un circuit secondaire à l'extérieur du caloduc, est réalisé lors de la condensation liquide du fluide caloporteur du caloduc.

L'une des limites de ce type de dispositif concerne la surchauffe du deuxième fluide caloporteur qui est situé à l'extérieur du caloduc.

Par exemple, en l'absence de consommation de l'eau chauffée et donc d'évacuation des calories transférées, l'augmentation de la température et de la pression peuvent entraîner :
- la dégradation du fluide caloporteur du caloduc, et le cas échéant du fluide caloporteur présent à l'extérieur du caloduc (circuit secondaire) ;
- la dégradation des matériaux constituant le caloduc ou le circuit solaire ;
- la nécessité de dimensionner les caloducs de manière à résister à ces pressions, ce qui augmente le coût de fabrication.

Les solutions avancées pour remédier à ce problème consistent notamment :
- à limiter ou à arrêter l'apport solaire ;
- à limiter ou à arrêter la récupération de l'énergie par le fluide caloporteur à l'intérieur du caloduc ;
- à limiter ou à arrêter l'échange d'énergie entre le caloduc et le circuit solaire.

La présente invention concerne cette troisième solution.

Les dispositifs de l'art antérieur permettant de limiter ou d'arrêter les échanges énergétiques entre le caloduc et le circuit secondaire mettent généralement en oeuvre une valve mécanique avec ressort, un système de bilame, ou un réfrigérant par exemple.

Le document FR3003636A divulgue les caractéristiques du préambule de la revendication 1.

Cependant, ces dispositifs présentent un certain nombre d'inconvénients, parmi lesquels peuvent être cités :
- le risque de blocage des pièces mécaniques en cas d'usure ou de frottements intempestifs au cours de la durée d'utilisation (une vingtaine d'années). En outre, les matériaux constituant ces pièces mécaniques doivent être chimiquement compatibles avec le fluide caloporteur pour ne pas générer des composés indésirables, tels que des composés chimiques qui pourraient réduire les performances du caloduc ;
- la diminution du volume de fluide caloporteur pouvant être contenu dans le caloduc en raison de la présence d'un réfrigérant. En outre, cette solution présente l'inconvénient de limiter le nombre de fluides présentant les propriétés adéquates. D'autre part, l'arrêt ou la limitation des échanges thermiques est obtenu sur une plage de température assez large, ce qui diminue l'efficacité du caloduc en conditions normales.

La présente invention permet de remédier à ces écueils en mettant en oeuvre un système permettant de limiter ou d'arrêter les échanges énergétiques entre le caloduc et son environnement extérieur par la création progressive d'un bouchon de gaz incondensable permettant d'obturer au moins partiellement le condenseur du caloduc.

### EXPOSE DE L'INVENTION

La présente invention concerne un caloduc comportant un système d'arrêt progressif des échanges thermiques entre un fluide caloporteur contenu dans le caloduc et, par exemple, un deuxième fluide caloporteur à l'extérieur du caloduc.

Dans ce caloduc, un matériau poreux permet de capturer et libérer par désorption un gaz au fur et à mesure que la température interne du caloduc augmente.

Ce gaz est incondensable dans les conditions de température et de pression d'utilisation du caloduc. En d'autres termes, il ne participe pas aux échanges thermiques du caloduc. Il ne s'agit pas d'un fluide caloporteur dans les conditions d'utilisation du caloduc.

Ce système d'arrêt est réversible et stable dans le temps. Le matériau poreux stocke ledit gaz lorsque la température baisse, et il le libère par désorption lorsque la température augmente.

Ainsi, le caloduc selon la présente invention comprend deux fluides, dont un seul est en équilibre entre sa phase liquide et sa phase gazeuse. Le deuxième fluide n'existe qu'à l'état de gaz.

Plus précisément, la présente invention concerne un caloduc comprenant les caractéristiques de la revendication 1.

De manière avantageuse, le gaz adsorbable ou absorbable est incondensable dans les conditions de saturation du fluide caloporteur, c'est-à-dire dans les conditions d'équilibre vapeur-liquide du fluide caloporteur.

Selon un premier mode de réalisation avantageux, le caloduc selon la présente invention comprend un matériau poreux adsorbant et un gaz adsorbable.

Selon un autre mode de réalisation, le caloduc selon la présente invention peut comprendre un matériau poreux absorbant et un gaz absorbable.

Les conditions d'opération du caloduc correspondent avantageusement à une température comprise entre -20°C et 200°C, la pression interne du caloduc dépendant notamment de la température, du fluide caloporteur (quantité et plage de températures correspondant à l'équilibre liquide/vapeur), et du gaz adsorbable ou adsorbable (nature et quantité fixée ou non).

Par « hermétique », on entend une enceinte close ne laissant pas traverser les liquides, les solides et les gaz. L'enceinte hermétique correspond au volume interne du caloduc.

Pour plus de clarté, le terme « fixer » est utilisé pour désigner l'adsorption ou l'absorption du gaz par le matériau poreux.

L'enceinte hermétique présente généralement une forme allongée. Sa section (vue en coupe) peut être circulaire, ovale, ou comprendre plusieurs faces (section carrée, rectangulaire, hexagonale, parallélépipédique, en étoile...). Elle peut également comprendre des saillies ou des rainures. Dans un caloduc, les saillies ou rainures sont également appelées « ailettes ». Elles permettent d'augmenter la surface d'échange et donc les échanges thermiques. De manière générale, une section circulaire permet une meilleure tenue en pression.

Le condenseur est généralement situé à l'une des extrémités du caloduc, à l'opposé de l'évaporateur.

Le condenseur permet la condensation liquide du fluide caloporteur, alors que l'évaporateur permet sa vaporisation. Ils correspondent généralement et respectivement aux parties froide et chaude du caloduc.

Leur fonctionnement est assuré par le positionnement du caloduc. Il s'agit par exemple dans un capteur solaire, de l'exposition de l'évaporateur au rayonnement solaire, et de la mise en contact du condenseur avec un fluide extérieur au caloduc, plus froid.

Ainsi, le caloduc est avantageusement constitué d'un tube (forme cylindrique), dont les extrémités correspondent respectivement au condenseur et à l'évaporateur. Le diamètre du condenseur est avantageusement supérieur au diamètre de l'évaporateur, ce qui permet d'augmenter la surface d'échanges.

De manière générale, le caloduc est en matériau thermiquement conducteur, avantageusement en cuivre. Il peut également être en aluminium, notamment pour les applications spatiales.

L'enceinte hermétique du caloduc présente une longueur totale avantageusement comprise entre 100 et 250 centimètres, plus avantageusement entre 180 et 230 centimètres.

L'épaisseur du caloduc est de l'ordre de quelques millimètres, de façon à résister aux niveaux de pression dans l'enceinte hermétique.

Le condenseur représente avantageusement 15 à 20% du volume de l'enceinte hermétique du caloduc. En outre, l'évaporateur représente avantageusement 80 à 85% du volume de l'enceinte hermétique du caloduc.

Le caloduc comprend également un matériau poreux apte à fixer (par absorption ou adsorption) le gaz (absorbable ou adsorbable) qui est présent dans ledit caloduc. De manière avantageuse, le fluide caloporteur n'est pas, ou quasiment pas, fixé par ce matériau poreux. En outre, et toujours de manière avantageuse, il n'y a pas d'interaction(s) (en termes d'absorption ou d'adsorption) entre le fluide caloporteur et le matériau poreux, de sorte que les molécules du fluide caloporteur ne viennent pas obstruer les pores du matériau poreux.

Le matériau poreux mis en oeuvre permet de fixer le gaz incondensable. De manière avantageuse, il s'agit d'une fixation par adsorption. En d'autres termes, il ne s'agit pas d'un phénomène d'absorption qui implique la formation de liaisons chimiques fortes entre deux matériaux i.e. le matériau à stocker et le matériau absorbant. Les liaisons formées par absorption étant très fortes, la réversibilité du stockage par absorption peut être altérée. C'est la raison pour laquelle, la fixation du gaz est avantageusement réalisée par adsorption.

Dans le phénomène d'adsorption par physisorption mis en oeuvre dans la présente invention, les liaisons formées sont des liaisons faibles de type Van Der Walls entre le matériau à stocker (gaz) et le matériau stockant (matériau poreux adsorbant). Le gaz adsorbable se fixe à la surface du matériau adsorbable par physisorption, c'est-à-dire par interactions faibles et donc facilement réversibles.

De manière générale, la capacité d'un matériau poreux à adsorber un gaz spécifique dépend :
- du volume de ses pores (micro-pores : d < 2nm ; méso-pores : 2nm < d < 50nm ; macro-pores : d > 50nm ; d représentant le diamètre des pores) ;
- de la surface spécifique, exprimée en m².g⁻¹ ;
- de la densité de remplissage tassée (DRT), qui correspond à la densité du matériau après compactage de la poudre. La DRT est proportionnelle à la réduction du volume.

En outre, les pores peuvent présenter différentes géométries selon le type de matériau poreux. Elles peuvent notamment être sphériques, cylindriques, ou en forme de fentes.

De manière avantageuse, le matériau poreux adsorbant mis en oeuvre dans le caloduc selon l'invention peut être en zéolite ou en charbon actif.

Les zéolites, également appelées tamis moléculaires, présentent généralement une bonne homogénéité de taille des pores, dont le diamètre moyen est généralement inférieur à 2 nanomètres et pouvant être de l'ordre de l'Angstrom (Å). Il peut notamment s'agir de zéolite, dont la taille moyenne de pores est juste supérieure au diamètre cinétique des molécules du gaz incondensable, et inférieure au diamètre cinétique des molécules du fluide caloporteur. Typiquement, dans le cas d'un binôme CO₂ (gaz incondensable) / n-butane (fluide caloporteur), dont les diamètres cinétiques vis-à-vis de la zéolite sont respectivement et approximativement de 3.30 à 3.94Å et 4.68Å, une zéolite de type 4A, dont le diamètre moyen des pores est de 4Å est tout à fait indiquée pour assurer un tamisage moléculaire.

Le charbon actif est un matériau micro ou méso-poreux présentant des pores en forme de fente, et dont la taille moyenne peut être inférieure à 50 nanomètres. A titre d'exemple, les charbons actifs de type Filtrasorb® F400 (commercialisé par Calgon Carbon Corporation) ou Ecosorb® (commercialisé par la société Jacobi) sont particulièrement adaptés pour adsorber du dioxyde de carbone. Ces deux exemples de charbons actifs présentent une relativement bonne homogénéité de taille des pores d'environ 1 nanomètre pour le Filtrasorb et 5 nanomètres pour l'Ecosorb.

Quand bien même les zéolites présentent généralement une capacité d'adsorption inférieure à celle des charbons actifs, leur meilleure sélectivité et leur moindre sensibilité aux hautes températures les rendent plus avantageuses que ces derniers.

Le matériau poreux du caloduc selon l'invention présente une surface spécifique avantageusement comprise entre 100 m².g⁻¹ et quelques milliers de m².g⁻¹, plus avantageusement entre 400 et 700 m²/g dans le cas des solides microporeux et entre 500 et 2000 m²/g dans le cas des charbons actifs. En outre, sous forme de poudre il présente une masse volumique avantageusement comprise entre 0.7 et 0.8g/cm³. Sous forme de pellets (grains), il présente une densité de remplissage tassée (DRT) pouvant être avantageusement de l'ordre de 1.20g/cm³.

La nature du matériau poreux mis en oeuvre dans la présente invention peut être adaptée en fonction des paramètres suivants :
- affinité chimique plus importante pour le gaz adsorbable ou absorbable que pour le fluide caloporteur ;
- taille de pore supérieure à la taille du gaz adsorbable ou absorbable et inférieure à la taille des molécules de fluide caloporteur ;
- homogénéité de la taille des pores (distribution de taille étroite) ;
- bonne capacité de fixation (par adsorption ou absorption) par rapport au poids du matériau poreux ;
- stabilité dans le temps et dans les conditions d'utilisation (température et pression).

L'homme du métier saura adapter le choix du fluide caloporteur, du gaz adsorbable ou absorbable et du matériau poreux en fonction de leurs propriétés respectives.

Le matériau poreux est avantageusement en contact avec le gaz adsorbable ou absorbable et avec le fluide caloporteur. Il est préférentiellement dans le condenseur.

Il peut être réparti sur les parois internes du caloduc. Il peut également être conditionné entre l'extrémité du caloduc correspondant au condenseur, notamment entre une grille et ladite extrémité. Il peut également être conditionné entre deux grilles au sein du caloduc. Ces grilles sont bien entendu perméables au fluide caloporteur à l'état liquide ou vapeur. Elles peuvent également être perméables au gaz adsorbable ou absorbable.

Selon un mode de réalisation avantageux, le matériau poreux est dans le condenseur. Dans ce cas, le gaz fixé (par adsorption ou adsorption) est directement libéré dans le condenseur, limitant ainsi la condensation liquide du fluide caloporteur.

Dans le caloduc, le fluide caloporteur est en équilibre entre sa phase vapeur et sa phase liquide. Il remplit partiellement le volume de l'enceinte hermétique du caloduc. Il assure les échanges thermiques lors de l'utilisation du caloduc dont la température de fonctionnement par évaporation/condensation liquide est typiquement comprise entre - 20°C en hiver et 200°C, voire 150°C.

Eu égard à ces conditions de fonctionnement, le fluide caloporteur présente une stabilité chimique permettant de maintenir ses propriétés au cours des cycles thermiques.

En outre, il est compatible avec les matériaux constituant le caloduc de manière à éviter toute réaction secondaire pouvant compromettre le fonctionnement du caloduc.

Le fluide caloporteur condensable en conditions d'opération du caloduc présente une température de condensation liquide avantageusement comprise entre -20°C et 200°C à une pression comprise entre 100 et 4.10⁶ Pa.

Le fluide caloporteur peut notamment être choisi dans le groupe comprenant l'eau ; les alcanes en C₂-C₁₀ ; et les composés hydrocarbonés et fluorés en C₃-C₁₆. Il peut notamment s'agir du n-butane, du pentane, de l'heptane, ou du perfluoro-4-(trifluorométhyl)-3-pentanone (numéro CAS : 756-13-8).

Il s'agit avantageusement du n-butane.

Lorsqu'il est à l'état liquide, le fluide caloporteur représente avantageusement entre 2 et 30% du volume interne du caloduc c'est-à-dire de son enceinte hermétique, plus avantageusement entre 5 et 15%.

Outre le fluide caloporteur, le caloduc selon l'invention comprend un gaz adsorbable ou absorbable qui constitue un dispositif d'obturation du condenseur activable en fonction des conditions de température et de pression au sein du caloduc. La libération par désorption de ce gaz et l'impossibilité de le condenser dans les conditions de pression et de température d'utilisation du caloduc permettent de contrôler les échanges thermiques.

De manière avantageuse, le gaz est adsorbable par physisorption. Il est avantageusement non toxique, ce qui le rend particulièrement adapté pour des applications à grande échelle.

Comme déjà précisé, le gaz adsorbable ou absorbable n'est pas condensable dans les conditions de pression et de température d'utilisation du caloduc. A titre d'exemple, la pression interne du caloduc peut varier de 2 bar (à 20°C) à 40 bars à 150°C lorsque le fluide caloporteur est le n-butane.

Le gaz adsorbable ou absorbable peut être avantageusement choisi dans le groupe comprenant les alcanes en C₁-C₇ ; le dioxyde de carbone CO₂ ; l'azote N₂ ; et l'hydrogène H₂.

Selon un mode de réalisation préféré, il s'agit du dioxyde de carbone.

Lorsque le gaz adsorbable ou absorbable est un alcane en C₁-C₇, il est avantageusement de taille inférieure à celle du fluide caloporteur ce qui permet de favoriser un tamisage moléculaire.

De manière avantageuse, le gaz (sous forme de gaz non fixé) présente un volume au moins égal au volume interne du condenseur, à une température supérieure ou égale à 150°C et à une pression comprise entre 100 et 4.10⁶ Pa. Le volume de gaz nécessaire correspond au volume du condenseur additionné au volume qui sera fixé par le matériau dans les conditions de pression et de température à la température de saturation (par exemple 150°C).

Selon un mode de réalisation particulièrement avantageux de l'invention, le caloduc peut comprendre :
- la zéolite ayant une taille de pores de 4Å en tant que matériau poreux ;
- le n-butane en tant que fluide caloporteur ;
- le dioxyde de carbone en tant que gaz adsorbable.

Selon un autre mode de réalisation particulier, le caloduc comprend un dispositif d'obturation du condenseur, constitué par le gaz (adsorbable ou absorbable) lorsque le fluide caloporteur présente une température supérieure à 150°C. A cette température, un volume de gaz (adsorbable ou absorbable) équivalent au volume de gaz incondensable est libéré permettant ainsi de limiter ou d'arrêter les échanges thermiques entre le condenseur et un circuit externe au caloduc.

En d'autres termes, la désorption du gaz fixé par le matériau poreux permet la création d'un bouchon entre le condenseur et l'évaporateur du caloduc. La désorption du gaz est continue lorsque la température interne du caloduc (et donc du fluide caloporteur) augmente. Ainsi, le bouchon se forme progressivement.

La désorption du gaz est avantageusement réalisée lorsque la température interne du caloduc est supérieure à 100°C. Elle limite significativement les échanges thermiques lors de la montée en température jusqu'à 150°C.

Afin d'assurer la création du bouchon mais aussi la libre circulation du fluide caloporteur sous forme liquide, le matériau poreux est avantageusement apte à stocker au moins 80% de la quantité de gaz adsorbable ou absorbable, à une température avantageusement comprise entre -20 et 80°C, et à une pression avantageusement comprise entre 100 et 4.10⁶ Pa, plus avantageusement entre 100 et 2.10⁶ Pa.

La présente invention concerne également un procédé d'arrêt du caloduc selon l'invention, consistant à obturer le condenseur au moyen d'un gaz non condensable dans les conditions d'utilisation (température et pression) du caloduc.

Comme déjà précisé, ce gaz non condensable est fixé (par adsorption ou absorption) par un matériau poreux et libéré progressivement lorsque la température au sein du caloduc augmente, puis totalement ou quasi-totalement libéré à une température supérieure à 150°C.

Ainsi, et de manière avantageuse, le gaz présente un volume au moins égal à 100% du volume du condenseur, à une température supérieure ou égale à 150°C et à une pression comprise entre 100 et 4.10⁶ Pa.

Ce phénomène de fixation/désorption du gaz en fonction de la température au sein du caloduc permet de réguler les échanges thermiques entre le caloduc et un système de récupération d'énergie par exemple. Il s'agit de limiter ou d'arrêter le transfert de chaleur entre le caloduc et un circuit externe comprenant un fluide caloporteur.

La présente invention concerne également l'utilisation de ce caloduc dans le domaine des capteurs solaires.

L'invention et les avantages qui en découlent ressortiront mieux des figures et exemples suivants donnés afin d'illustrer l'invention et non de manière limitative.

### DESCRIPTION DES FIGURES

La figure 1 illustre un caloduc conventionnel.
La figure 2 illustre le condenseur d'un caloduc selon un mode de réalisation particulier de la présente invention.

### DESCRIPTION DETAILLEE DE L'INVENTION

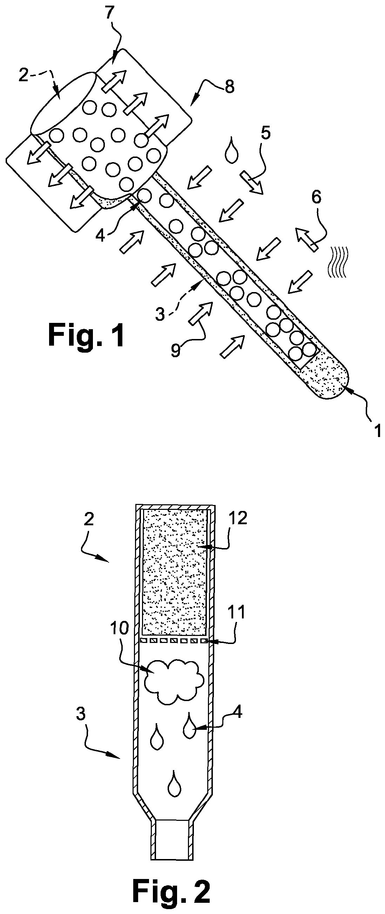

Le caloduc conventionnel illustré par la figure 1 est constitué d'une enceinte hermétique (1) comprenant un condenseur (2), un évaporateur (3) et un fluide caloporteur (4).

Le fluide caloporteur (4) est en équilibre entre sa phase vapeur (6) et sa phase liquide (5).

Lorsque l'évaporateur (3) du caloduc est exposé à une source de chaleur (9), le fluide caloporteur (4) se vaporise à l'intérieur du caloduc.

Le fluide caloporteur, sous forme de vapeur, est ensuite liquéfié dans le condenseur (2). Le caloduc étant en contact avec un matériau externe (8), la condensation liquide permet un échange thermique (7) entre le fluide caloporteur et l'extérieur du caloduc.

Le caloduc permet ainsi deux sortes d'échange thermique :
- (9) : entre la source de chaleur externe (9) et le fluide caloporteur sous forme liquide ;
- (7) : entre le fluide caloporteur sous forme de vapeur et le matériau (8) représentant éventuellement un circuit externe contenant un deuxième fluide caloporteur.

Le caloduc selon la présente invention se distingue notamment des caloducs conventionnels en ce qu'il comprend un fluide caloporteur, un matériau poreux adsorbant ou absorbant, et un gaz adsorbable ou absorbable et incondensable dans les conditions de température et de pression d'utilisation du caloduc.

La figure 2 illustre un mode de réalisation particulier du caloduc selon l'invention. Le condenseur (2) comprend un matériau poreux (12), et un gaz (10) (adsorbable ou absorbable) et incondensable dans les conditions d'utilisation du caloduc.

Selon ce mode de réalisation particulier, le matériau poreux (12) est physiquement maintenu en place dans le condenseur (2) au moyen d'une grille (11).

Lors de l'utilisation du caloduc, le gaz (10) est fixé par adsorption ou absorption, au moins en partie, par le matériau poreux (12) lorsque la température du fluide caloporteur (4) est inférieure à 150°C.

En revanche, au-delà de 150°C, le gaz (10) forme un bouchon dans le condenseur, obturant avantageusement l'intégralité du condenseur. Ainsi, le fluide caloporteur (4) sous forme de vapeur ne peut pas être liquéfié dans le condenseur (2). Les échanges thermiques entre le caloduc et le circuit externe (correspondant à (8) sur la figure 1), sont alors progressivement stoppés au fur et à mesure que le gaz (10) est libéré par désorption par le matériau poreux (12).

A l'état de désorption, le gaz (10) représente avantageusement au moins le volume interne du condenseur (2).

## Revendications

1. Caloduc comprenant une enceinte hermétique (1) contenant :
- un condenseur (2) ;
- un matériau poreux (12);
- un évaporateur (3) ;
- un fluide (4) caloporteur condensable en conditions d'opération du caloduc ;
- un gaz (10), distinct du fluide caloporteur, dont la température de condensation est supérieure à la température de condensation du fluide caloporteur dans les conditions d'opération du caloduc,
le gaz constituant un dispositif d'obturation du condenseur activable en fonction des conditions de température et de pression au sein du caloduc, **caractérisé en ce que**
le matériau poreux (12) est adsorbant ou absorbant; le gaz (10) est adsorbable ou absorbable par le matériau poreux ; et
le matériau poreux stockant le gaz adsorbable ou absorbable lorsque la température du caloduc baisse, et le libérant par désorption lorsque la température du caloduc augmente.

2. Caloduc selon la revendication 1, ***caractérisé* en ce que** le matériau poreux est en zéolite ou en charbon actif.

3. Caloduc selon la revendication 1 ou 2, ***caractérisé* en ce que** le matériau poreux est dans le condenseur.

4. Caloduc selon l'une des revendications 1 à 3, ***caractérisé* en ce que** le fluide caloporteur présente une température de condensation liquide comprise entre -20 et 200°C à une pression comprise entre 100 et 4.10⁶ Pa.

5. Caloduc selon l'une des revendications 1 à 4, ***caractérisé* en ce que** le fluide caloporteur est choisi dans le groupe comprenant l'eau ; les alcanes en C₂-C₁₀ ; et les composés hydrocarbonés et fluorés en C₃-C₁₆.

6. Caloduc selon l'une des revendications 1 à 5, ***caractérisé* en ce que** le gaz est choisi dans le groupe comprenant les alcanes en C₁-C₇ ; le dioxyde de carbone ; l'azote ; et l'hydrogène.

7. Caloduc selon l'une des revendications 1 à 6, ***caractérisé* en ce que** :
- le matériau poreux est zéolite ayant une taille de pores de 4Å ;
- le fluide caloporteur est n-butane ;
- le gaz est dioxyde de carbone.

8. Caloduc selon l'une des revendications 1 à 7, ***caractérisé* en ce qu'**il comprend un dispositif d'obturation du condenseur constitué par le gaz lorsque le fluide caloporteur présente une température supérieure à 150°C.

9. Caloduc selon l'une des revendications 1 à 8, ***caractérisé* en ce que** le matériau poreux est apte à stocker au moins 80% de la quantité de gaz, à une température comprise entre -20 et 80°C, et à une pression comprise entre 100 et 2.10⁶ Pa.

10. Caloduc selon l'une des revendications 1 à 9, ***caractérisé* en ce que** le gaz présente un volume au moins égal à 100% du volume du condenseur, à une température supérieure ou égale à 150°C et à une pression comprise entre 100 et 4.10⁶ Pa.

11. Utilisation du caloduc selon l'une des revendications 1 à 10, dans le domaine des capteurs solaires.

## Patentansprüche

1. Wärmeleitrohr, umfassend ein hermetisches Gehäuse (1), das folgendes enthält:
- einen Kondensator (2);
- ein poröses Material (12);
- einen Verdampfer (3);
- eine unter den Betriebsbedingungen des Wärmeleitrohrs kondensierbare Wärmeübertragungsflüssigkeit (4);
- ein von der Wärmeübertragungsflüssigkeit getrenntes Gas (10), dessen Kondensationstemperatur höher ist als die Kondensationstemperatur der Wärmeübertragungsflüssigkeit unter den Betriebsbedingungen des Wärmeleitrohrs, wobei das Gas eine Schließvorrichtung Kondensators bildet, der in Abhängigkeit von Temperatur- und Druckverhältnissen innerhalb des Wärmeleitrohrs aktivierbar ist, **dadurch gekennzeichnet, dass** das poröse Material (12) adsorbierend oder absorbierend ist; das Gas (10) durch das poröse Material adsorbierbar oder absorbierbar ist; und das poröse Material, das das adsorbierbare oder absorbierbare Gas speichert, wenn die Temperatur des Wärmeleitrohrs sinkt, und es durch Desorption freisetzt, wenn die Temperatur des Wärmeleitrohrs steigt.

2. Wärmeleitrohr nach Anspruch 1, **dadurch gekennzeichnet, dass** das poröse Material aus Zeolith oder Aktivkohle besteht.

3. Wärmeleitrohr nach Anspruch 1 oder 2, **dadurch gekennzeichnet, dass** sich das poröse Material im Kondensator befindet.

4. Wärmeleitrohr nach einem der Ansprüche 1 bis 3, **dadurch gekennzeichnet, dass** die Wärmeübertragungsflüssigkeit eine Flüssigkeitskondensationstemperatur zwischen -20 und 200° C bei einem Druck zwischen 100 und 4.10⁶ Pa aufweist.

5. Wärmeleitrohr nach einem der Ansprüche 1 bis 4, **dadurch gekennzeichnet, dass** die Wärmeübertragungsflüssigkeit aus der Gruppe ausgewählt ist, die aus Wasser, C₂-C₁₀-Alkanen und C₃-C₁₆-Kohlenwasserstoff und fluorierten Verbindungen besteht.

6. Wärmeleitrohr nach einem der Ansprüche 1 bis 5, **dadurch gekennzeichnet, dass** das Gas aus der Gruppe ausgewählt ist, die aus C₁- C₇-Alkanen, Kohlendioxid, Stickstoff und Wasserstoff besteht.

7. Wärmeleitrohr nach einem der Ansprüche 1 bis 6, **dadurch gekennzeichnet, dass**:
- das poröse Material Zeolith mit einer Porengröße von 4Ä;
- die Wärmeübertragungsflüssigkeit n-Butan;
- das Gas Kohlendioxid ist.

8. Wärmeleitrohr nach einem der Ansprüche 1 bis 7, **dadurch gekennzeichnet, dass** es eine Schließvorrichtung des bestehenden Kondensators aus Gas umfasst, wenn die Wärmeübertragungsflüssigkeit eine Temperatur von mehr als 150°C aufweist.

9. Wärmeleitrohr nach einem der Ansprüche 1 bis 8, **dadurch gekennzeichnet, dass** das poröse Material geeignet ist, mindestens 80% der Gasmenge bei einer Temperatur zwischen -20 und 80°C und einem Druck zwischen 100 und 2.10⁶ Pa zu speichern.

10. Wärmeleitrohr nach einem der Ansprüche 1 bis 9, **dadurch gekennzeichnet, dass** das Gas bei einer Temperatur von 150° C und mehr und einem Druck von 100 bis 4.10⁶ Pa ein Volumen von mindestens 100% des Volumens des Kondensators aufweist.

11. Verwendung des Wärmeleitrohrs nach einem der Ansprüche 1 bis 10 im Bereich der Solarkollektoren.

## Claims

1. Heat pipe comprising a hermetically sealed enclosure (1) containing:
- a condenser (2);
- a porous material (12);
- an evaporator (3);
- a heat-transfer fluid (4) condensatable under the operating conditions of the heat pipe;
- a gas (10) separate from the heat-transfer fluid, whose condensation temperature is higher than the condensation temperature of the heat-transfer fluid under the operating conditions of the heat pipe, which gas forms a condenser blanking device activatable depending on the temperature and pressure conditions prevailing in the heat pipe, **characterized in that** the porous material (12) is adsorbent or absorbent; the gas (10) is adsorbable or absorbable by the porous material; and the porous material stocking the adsorbable or absorbale gas when the temperature of the heat pipe drops, and releases it by desorption when the temperature of the heat pipe increases.

2. Heat pipe according to claim 1, ***characterized in that*** the porous material is of zeolite or activated carbon.

3. Heat pipe according to claim 1 or 2, ***characterized in that*** the porous material is in the condenser.

4. Heat pipe according to one of the claims 1 to 3, ***characterized in that*** the heat-transfer fluid has a liquid condensation temperature included between -20 and 200° C and a pressure included between 100 and 4.10⁶ Pa.

5. Heat pipe according to one of the claims 1 to 4, ***characterized in that*** the heat-transfer fluid is chosen from the group comprising water; alkanes in C₂-C₁₀; and the hydrocarbonated and fluorinated compounds in C₃-C₁₆.

6. Heat pipe according to one of the claims 1 to 5, ***characterized in that*** the gas is chosen from the group comprising alkanes in C₁-C₇; carbon dioxide; nitrogen; and hydrogen.

7. Heat pipe according to one of the claims 1 to 6, ***characterized in that*:**
- the porous material is zeolite having a pore size of 4Å;
- the heat-transfer fluid is n-butane;
- the gas is carbon dioxide.

8. Heat pipe according to one of the claims 1 to 7, ***characterized in that*** it comprises a condenser blanking device consisting of the gas when the heat-transfer fluid is at a temperature greater than 150° C.

9. Heat pipe according to one of the claims 1 to 8, ***characterized in that*** the porous material is liable to stock at least 80% of the quantity of gas, at a temperature included between - 20 and 80° C, and at a pressure included between 100 and 2.10⁶ Pa.

10. Heat pipe according to one of the claims 1 to 9, ***characterized in that*** the gas has a volume at least equal to 100% of the condenser volume, at a temperature equal to or greater than 150° C and at a pressure included between 100 and 4.10⁶ Pa.

11. Use of the heat pipe according to one of the claims 1 to 10, in the field of solar sensors.
